# EUROPÄISCHE PATENTSCHRIFT

(11) **EP 3 063 423 B1**
(45) Veröffentlichungstag und Bekanntmachung des Hinweises auf die Patenterteilung: **08.12.2021**
(21) Anmeldenummer: 15700983.8
(22) Anmeldetag: 14.01.2015
(51) Int. Cl.: F16C 27/04, H02K 5/24, H02K 7/16

(54) **GEDÄMPFTE LAGERUNG EINER ROTORWELLE**
DAMPED BEARING OF A ROTOR SHAFT
PALIER AMORTI D'ARBRE DE ROTOR

(30) Priorität: 23.01.2014 EP 14152298
(43) Veröffentlichungstag der Anmeldung: 07.09.2016
(73) Patentinhaber: Siemens Aktiengesellschaft, 80333 München (DE)
(72) Erfinder: BAUER, Christian, 91728 Gnotzheim (DE)
(86) Internationale Anmeldenummer: PCT/EP2015/050535
(87) Internationale Veröffentlichungsnummer: WO 2015/110322

(56) Entgegenhaltungen:
- DE-A1-102006 058 172
- DE-B3-102006 026 123
- GB-A- 2 269 864
- US-A- 2 062 290
- US-A- 4 514 458
- US-A1- 2002 139 603

## Beschreibung

### Gedämpfte Lagerung einer Rotorwelle

Die Erfindung betrifft eine Anordnung zum gedämpften Lagern einer Rotorwelle einer elektrischen Maschine. Weiterhin betrifft die Erfindung eine elektrische Maschine mit einer Rotorwelle und zumindest einer derartigen Anordnung. Ferner betrifft die Erfindung ein Verfahren zum gedämpften Lagern einer Rotorwelle einer derartigen elektrischen Maschine.

Derartige Anordnungen und ein derartiges Verfahren kommen beispielsweise bei Elektromotoren oder Generatoren zum Einsatz. Lagert man einen beliebigen Rotor drehend, ergeben sich je nach Art der Lagerung Eigenfrequenzen mit den zugehörigen Eigenformen. Lagerungen von Rotoren können beispielsweise ausgeführt sein als hydrodynamische Gleitlager, hydrostatische Gleitlager, Wälzlager, aktive und passive Magnetlager oder Luftlager.

Man unterscheidet hierbei zwischen unterkritischen Rotoren und überkritischen Rotoren. Liegt die erste Eigenfrequenz des Systems oberhalb seiner Betriebsdrehzahl, so spricht man von einem unterkritischen Rotor. Liegen Eigenfrequenzen unterhalb der Betriebsdrehzahl handelt es sich um einen überkritischen Rotor. In diesem Fall benötigt man eine äußere Dämpfung einer bestimmten Größe an den Lagerstellen, um die Eigenfrequenzen bis zur Betriebsdrehzahl durchfahren oder den Rotor in seiner Eigenfrequenz betreiben zu können. Des Weiteren ist es möglich, dass infolge innerer Dämpfung des Rotors oder durch das Trägermedium von Gleitlagern bedingt eine Instabilität des Rotorsystems auftritt. Um dies zu verhindern, wird ebenfalls eine äußere Dämpfung in den Lagerstellen benötigt.

Bei einer Rotorlagerung mit nur sehr geringer äußerer Dämpfung an den Lagerstellen ist es nicht möglich, den Rotor überkritisch zu betreiben. Eine Art der Lagerung, die nur geringe Dämpfung generiert, wird z.B. Wälzlager realisiert. Bei Gleitlagern kann Dämpfung durch das Trägermedium erzeugt werden. Diese ist jedoch häufig nicht groß genug, um den Rotor in einer seiner Eigenfrequenzen betreiben und Instabilitäten in einem beliebigen Drehzahlbereich vermeiden zu können. Passive Magnetlager und Luftlager verfügen ebenfalls über nur sehr geringe Dämpfungseigenschaften. Bei aktiven Magnetlagern wird das Rotorsystem durch äußere Magnetkräfte stabil gehalten und Lagerdämpfung erzeugt.

Reicht die Dämpfung in den Lagerstellen nicht aus, gibt es verschiedene Möglichkeiten, zusätzliche Dämpfung zu erzeugen, z. B. Gummielemente unterhalb des Lagers oder Quetschöldämpfer unterhalb des Lagers oder direkt am Rotor.

Aus der DE 197 01 178 A1 ist ein Lagerring bekannt, der eine innere und eine äußere Lagerschale aufweist, welche mit radialem Abstand zueinander angeordnet sind und in deren so gebildetem Zwischenraum ein die beiden Lagerschalen drehfest verbindendes Element angeordnet ist, welches als ein Drahtgestrick ausgeführt ist.

Aus der DE 10 2006 058 172 A1 ist ein Wälzlager mit einem ganz ähnlichen Aufbau bekannt.

Aus der DE 20 2010 004 482 U1 ist ein Axialwälzlager bekannt, welches einen oberen Ring, einen unteren Ring und zwischen den Ringen Kugeln aufweist, wobei für die Ringe ein gepresstes Band aus Metallfasern verwendet wird und wobei die Ringe mit Kunststoffschalen übergossen sind.

Aus der US 2 062 290 A ist eine Anordnung zum gedämpften Lagern einer mittels eines Kugellagers gelagerten Welle bekannt. Diese Anordnung umfasst einen Gummiring, der in radialer Richtung zwischen dem Kugellager und bspw. einem Gehäuse angeordnet ist.

Der Erfindung liegt die Aufgabe zugrunde, eine Alternative zum gedämpften Lagern einer Rotorwelle bereitzustellen.

Diese Aufgabe wird durch eine Anordnung gemäß Anspruch 1 gelöst.

Weiterhin wird diese Aufgabe durch eine elektrische Maschine gemäß Anspruch 10 gelöst.

Vorzugsweise ist dabei vorgesehen, dass die Lagereinheit zwischen der Rotorwelle und dem Gehäuse der elektrischen Maschine angeordnet ist und das Dämpfungselement zwischen der Lagereinheit und der Rotorwelle oder zwischen der Lagereinheit und dem Gehäuse angeordnet ist.

Ferner wird diese Aufgabe durch ein Verfahren gemäß Anspruch 11 gelöst.

Das Dämpfungselement kann beispielsweise aus gepresstem Metalldraht hergestellt werden und ist insbesondere um die Lagerstelle herum angebracht, so dass das Dämpfungselement radial außen an der Lagereinheit angeordnet ist und die Lagereinheit umschließt. Von radial innen nach radial außen sind somit zunächst die Rotorwelle, dann die Lagereinheit, anschließend das Dämpfungselement und schließlich das Gehäuse der elektrischen Maschine angeordnet.

Alternativ kann das Dämpfungselement radial außen an der Rotorwelle angeordnet sein und die Rotorwelle umschließen. Entsprechend sind von radial innen nach radial außen zunächst die Rotorwelle, dann das Dämpfungselement, anschließend die Lagereinheit und schließlich das Gehäuse der elektrischen Maschine angeordnet. Folglich umhüllt die Lagereinheit, welche den Drehfreiheitsgrad für die Rotorwelle zur Verfügung stellt, das Dämpfungselement, so dass die eigentliche Lagerstelle sich auf der Außenseite des Dämpfungselementes befindet.

Durch das Dämpfungselement wird eine zusätzliche, große Dämpfungswirkung in das System der gelagerten Rotorwelle eingebracht. Während einer Schwingung der Rotorwelle in Bezug auf das Gehäuse wird durch die in den Drahtwindungen entstehende Reibung die Dämpfung erzeugt, wobei die Dämpfung als äußere Dämpfung wirkt.

Prinzipiell können auch zwei derartige Dämpfungselemente vorgesehen werden, zwischen welchen die Lagereinheit angeordnet ist. Diese Ausführungsform ermöglicht eine besonders große Dämpfung in das System der gedämpft gelagerten Rotorwelle anzubringen.

Die vorgeschlagene Lösung kann, wie oben beschrieben, zur gedämpften Lagerung von radialen Kräften verwendet werden. Auch eine gedämpfte Lagerung von axialen Kräften kann mit der vorgeschlagenen Lösung bewerkstelligt werden, indem das Dämpfungselement und die Lagereinheit in axialer Richtung zwischen der Rotorwelle bzw. einem Teil der Rotorwelle und dem Gehäuse angeordnet sind. Zusätzlich sind auch Mischformen möglich, mittels welchen eine Überlagerung von radialen Kräften und axialen Kräften gedämpft aufgenommen werden.

Die Wirkverbindung des Kraftelementes mit dem Sensorelement kann beispielsweise dadurch verwirklicht werden, dass ein direkter Datenaustausch mittels einer Drahtverbindung oder einer drahtlosen Verbindung zwischen dem Sensorelement und dem Kraftelement besteht. Denkbar ist auch, dass die Wirkverbindung mittelbar ausgestaltet wird, beispielsweise indem Daten des Sensorelementes über die Recheneinheit und die Umrichtereinheit schließlich eine bestimmte Aktion des Kraftelementes bewirken.

Das vorgeschlagene Verfahren zum gedämpften Lagern der Rotorwelle sieht vor, dass die Federkonstante des Dämpfungselementes, die Dämpfungskonstante des Dämpfungselementes und/oder die auf das Dämpfungselement wirkende Vorspannkraft erfasst wird, wobei hierzu das Sensorelement zum Einsatz kommt. Weiterhin ist vorgesehen, dass das Dämpfungselement regelbar vorspannbar ist, wobei hierzu das Kraftelement und beispielsweise eine Recheneinheit eingesetzt werden.

Prinzipiell kann die Vorspannkraft als Druck- oder Zugkraft ausgestaltet sein. Insbesondere wenn zwei oder mehr Kraftelemente vorgesehen sind, kann auch eine Kombination aus verschiedenen Druck- oder Zugkräften realisiert werden, welche insbesondere in unterschiedlichen Richtungen auf das Dämpfungselement wirkenden bzw. an unterschiedlichen Punkten am Dämpfungselement angreifen. Derart lässt sich eine Anisotropie der Dämpfungseigenschaften erreichen, wodurch in unterschiedliche Richtungen wirkende Schwingungsmoden unterschiedlich stark gedämpft werden können.

Beim vorgeschlagenen Verfahren zum Betrieb einer elektrischen Maschine und der entsprechenden Anordnung ist insbesondere bei einem überkritischen Betrieb vorgesehen, dass die Eigenfrequenzen der Rotorwelle und/oder der elektrischen Maschine möglichst schnell durchfahren werden. Entsprechend liegt beim Hochlaufen der elektrischen Maschine die positive zeitliche Drehzahländerung und beim Auslaufen der elektrischen Maschine eine negative zeitliche Drehzahländerung vor. Dabei ist die größtmögliche, zeitliche Drehzahländerung insbesondere jene, welche sowohl von der Umrichtereinheit als auch von der elektrischen Maschine technisch dauerhaft realisierbar ist, ohne dass dabei eine Beschädigung der Ausrüstung oder eine übermäßige Alterung bzw. ein übermäßiger Verschleiß der Ausrüstung einhergeht.

Insbesondere kann vorgesehen sein, dass das Sensorelement zur Ermittlung der Eigenfrequenzen Test-Impulse einprägt und die Antwort des Systems auf die Test-Impulse ermittelt. Die Umrichtereinheit ist insbesondere zur Versorgung des Stators der elektrischen Maschine mit elektrischer Energie vorgesehen und beaufschlagt den Stator entsprechend den Vorgaben der Recheneinheit. Die Recheneinheit kann beispielsweise als Mikrocontroller, CPU oder dergleichen ausgeführt sein und insbesondere in das Sensorelement, das Kraftelement oder die Umrichtereinheit integriert werden. Alternativ kann die Recheneinheit in einer übergeordneten Steuerung oder der Umrichtereinheit integriert sein.

Weiterhin ist die Lagereinheit als Wälzlager oder als Gleitlager ausgebildet.

Wälzlager verfügen üblicherweise über keine oder eine nur sehr geringe eigene Dämpfung. Die zusätzliche, äußere Dämpfung der vorgeschlagenen Anordnung ermöglicht, ein Rotorsystem auch dann überkritisch zu betreiben, wenn solche Lagerungsarten zum Einsatz kommen, die nur sehr wenig eigene Dämpfung generieren. Dies ermöglicht beispielsweise, die Lagerung eines vergleichsweise leistungsstarken Elektromotors mit einer Achshöhe von 450 mm und mehr mittels der vorgeschlagenen Anordnung mit einem Wälzlager zu bewerkstelligen. Derart große und leistungsstarke elektrische Maschinen werden üblicherweise überkritisch betrieben, so dass die Betriebsdrehzahl größer als zumindest eine Eigenfrequenz der elektrischen Maschine ist. Dabei bietet die Verwendung eines Wälzlagers mehrere Vorteile, wie zum Beispiel eine vergleichsweise einfache Montage und Wartung. Dabei wird der Nachteil des Wälzlagers der sehr geringen Dämpfung durch das Dämpfungselement mehr als ausgeglichen, so dass große elektrische Maschinen Dank der vorgeschlagenen Anordnung auch mit einem Wälzlager überkritisch betrieben werden können.

Gleitlager können selbst eine äußere Dämpfung erzeugen, so dass die Verwendung eines Gleitlagers bei der vorgeschlagenen Anordnung ermöglicht, die Dämpfung des Gesamtsystems weiter zu erhöhen. Dadurch kann die Rotorwelle in oder über einer seiner Eigenfrequenzen betrieben werden, da die Antwortamplituden einer belieben Anregung infolge der hohen Dämpfung gering bleiben und eine Instabilität des Systems verhindert wird. Somit werden überkritische Rotoren mit praktisch uneingeschränktem Drehzahlstellbereich möglich.

Bei einer weiteren vorteilhaften Ausgestaltung der Erfindung weist das Dämpfungselement einen inneren Ring und einen äußeren Ring auf, wobei das Geflecht aus Metalldraht zwischen dem inneren Ring und dem äußeren Ring angeordnet ist.

Durch den inneren Ring und dem äußeren Ring wird das Geflecht aus Metalldraht sicher eingefasst und in seiner Position fixiert. Weiterhin wird dadurch eine besonders leichte Wartung ermöglicht, da ein verschlissenes Metallgeflecht leicht ausgetauscht werden kann. Dies wird beispielsweise dadurch erreicht, dass lediglich einer der Ringe entfernt werden muss, um das Metallgeflecht zu ersetzen und anschließend den entfernten Ring wieder anzubringen.

Weiterhin können die beiden Ringe auch zur Vorspannung des Dämpfungselementes verwendet werden, indem auf einen der Ringe beispielsweise eine Kraft in die eine axiale Richtung und auf den anderen Ring eine Kraft in die entgegengesetzte axiale Richtung ausgeübt wird.

Bei einer weiteren vorteilhaften Ausgestaltung der Erfindung weist der innere Ring und/oder der äußere Ring dabei einen L-förmigen Querschnitt auf.

Durch den L-förmigen Querschnitt kann das Metallgeflecht leicht von widrigen, äußeren Einflüssen, wie zum Beispiel Staub und anderen Verunreinigungen, geschützt werden. Insbesondere wenn sowohl der innere Ring als auch der äußere Ring einen L-förmigen Querschnitt aufweisen und die beiden L-förmigen Querschnitte derart angeordnet sind, dass ein rechteckiger Querschnitt gebildet wird, ist ein besonders zuverlässiger Schutz des Metallgeflechtes erreichbar. Weiterhin kann durch eine entsprechende Anordnung der kürzere Steg des L-förmigen Querschnitts dazu dienen, das Metallgeflecht in axialer Richtung zu fixieren, wodurch eine zuverlässige Einstellung einer Vorspannkraft des Dämpfungselementes ermöglicht wird.

Bei einer alternativen vorteilhaften Ausgestaltung der Erfindung weist der innere Ring und/oder der äußere Ring einen keilförmigen Querschnitt auf.

Dank des keilförmigen Querschnitts kann eine in axialer Richtung auf das Dämpfungselement wirkende Vorspannkraft dazu verwendet werden, auf die Lagereinheit und/oder die Rotorwelle eine modifizierte Vorspannkraft auszuüben, welche eine Komponente sowohl in axialer Richtung als auch in radialer Richtung aufweist. Dies kann besonders bei elektrischen Maschinen von Vorteil sein, bei denen in axialer und radialer Richtung wirkende Kräfte zuverlässig zu lagern sind und in entsprechende Richtungen ausgeprägte Schwingungen zuverlässig zu dämpfen sind.

Prinzipiell ist dabei auch denkbar, dass einer der beiden Ringe einen L-förmigen Querschnitt aufweist und der andere Ring einen keilförmigen Querschnitt aufweist.

Bei einer weiteren vorteilhaften Ausgestaltung der Erfindung weist das Dämpfungselement eine Federkonstante und eine Dämpfungskonstante auf, wobei das Dämpfungselement derart vorspannbar ist, dass das Dämpfungselement eine vorgebbare Federkonstante und/oder eine vorgebbare Dämpfungskonstante aufweist.

Die Steifigkeit des Dämpfungselements hängt unter anderem von der auf das Metallgeflecht aufgebrachten Vorspannkraft ab. Über diese Kraft lässt sich die Steifigkeit des Dämpfungselements einstellen. Insbesondere kann die vorgebbare Federkonstante und/oder die vorgebbare Dämpfungskonstante vorab ermittelt werden, beispielsweise indem entsprechende Berechnungen oder Versuche durchgeführt werden. Vorzugsweise wird die vorgebbare Federkonstante und/oder die vorgebbare Dämpfungskonstante derart gewählt, dass die die Eigenfrequenzen der Rotorwelle oder der elektrischen Maschine zu höheren Frequenzen hin verschoben werden. Durch das Ausüben einer Vorspannkraft, welche zu einer der vorgebbaren Federkonstante entsprechenden Federkonstante und/oder welche zu einer der vorgebbaren Dämpfungskonstante entsprechenden Dämpfungskonstante führt, kann die Rotorwelle insbesondere stets unterkritisch betrieben werden, wodurch die Stabilität der Rotorwelle bzw. der elektrischen Maschine erhöht wird.

Insbesondere kann das Dämpfungselement auch derart vorspannbar ausgeführt sein, dass die gesamte Anordnung zum gedämpften Lagern eine vorgebbare Federkonstante und/oder eine vorgebbare Dämpfungskonstante aufweist.

Bei einer weiteren vorteilhaften Ausgestaltung der Erfindung ist dabei ein Sensorelement vorgesehen, mittels welchem die Federkonstante des Dämpfungselementes, die Dämpfungskonstante des Dämpfungselementes und/oder die auf das Dämpfungselement wirkende Vorspannkraft erfassbar ist, wobei ein Kraftelement vorgesehen ist, welches mit dem Sensorelement wirkverbunden ist und mittels welchem das Dämpfungselement regelbar vorspannbar ist.

Durch den Einsatz des Sensorelementes und des Kraftelementes wird eine Regelung der Systemschwingungen realisierbar, so dass Eigenfrequenzen gezielt von der Betriebsfrequenz weggeschoben werden können. Hierzu erfasst das Sensorelement zunächst zumindest eine Eingangsgröße, welche beispielsweise die Dämpfungskonstante des Dämpfungselementes ist. Die Eingangsgröße wird mit einer Sollgröße verglichen, beispielsweise der vorgebbaren Dämpfungskonstante, wobei der Vergleich insbesondere durch die oben erläuterte Recheneinheit vorgenommen werden kann. Basierend auf diesem Vergleich wird das Kraftelement insbesondere mittels einer mit der Recheneinheit verbundenen Umrichtereinheit derart beaufschlagt, dass das Dämpfungselement die gewünschte Sollgröße aufweist. Insbesondere kann die Recheneinheit hierzu eine solche Größe einer Vorspannkraft ermitteln, welche die Krafteinheit auf das Dämpfungselement ausüben muss, damit die gewünschte Sollgröße erreicht wird.

Von Vorteil ist dabei insbesondere, dass vorab keine Versuche oder Berechnungen angestellt werden müssen und die Anordnung auch bei geänderten Randbedingungen eine zuverlässige Regelung der Systemschwingungen ermöglicht. Somit können insbesondere Änderungen der Federkonstante bzw. der Dämpfungskonstante des Dämpfungselementes ausgeglichen werden, welche insbesondere durch Temperaturschwankungen oder Alterung hervorgerufen werden können.

Insbesondere kann das Sensorelement derart ausgestaltet sein, dass die Federkonstante der gesamten Anordnung, die Dämpfungskonstante der gesamten Anordnung zum gedämpften Lagern und/oder die auf die gesamte Anordnung zum gedämpften Lagern wirkende Vorspannkraft erfassbar ist.

Das Sensorelement und das Kraftelement sind dabei insbesondere wie für das oben erläuterte Verfahren zum Betrieb der elektrischen Maschine über die Recheneinheit und die Umrichtereinheit verbunden. Gegebenenfalls kann auch eine direkte Verbindung des Sensorelementes mit dem Kraftelement vorgesehen sein.

Bei einer alternativen vorteilhaften Ausgestaltung der Erfindung ist das Dämpfungselement derart vorspannbar, dass die Rotorwelle und/oder die elektrische Maschine überkritisch betreibbar ist.

Insbesondere wird das Dämpfungselement bei einem überkritischen Betrieb der Rotorwelle bzw. der elektrischen Maschine derart vorgespannt, dass die Dämpfungskonstante des Dämpfungselementes hoch genug für einen stets sicheren Betrieb ist. Dies kann beispielsweise dadurch erreicht werden, dass das Dämpfungselement zumindest eine entsprechende, vorgebbare Dämpfungskonstante aufweist.

Die Vorspannkraft kann beispielsweise derart gewählt werden, dass jene Eigenfrequenzen, welche der Betriebsfrequenz der Rotorwelle bzw. der elektrischen Maschine am nächsten sind, weit genug von der Betriebsfrequenz entfernt sind. Insbesondere kann hierfür eine Eigenfrequenz, welche lediglich leicht unterhalb der Betriebsfrequenz liegt, weiter nach unten verschoben werden, solange die während des Durchfahrens dieser Eigenfrequenz vorhandene Dämpfung mittels des Dämpfungselementes zumindest temporär groß genug ausgebildet werden kann.

Bei einer weiteren vorteilhaften Ausgestaltung der Erfindung ist das Dämpfungselement derart vorspannbar, dass Eigenfrequenzen der gedämpft gelagerten Rotorwelle größer als eine Betriebsfrequenz der elektrischen Maschine sind.

Durch ein derart vorgespanntes Dämpfungselement kann die Rotorwelle bzw. die elektrische Maschine zuverlässig unterkritisch betrieben werden, wodurch sich die Stabilität des Systems und insbesondere die Lebensdauer der Lagereinheit erhöht.

Bei einer weiteren vorteilhaften Ausgestaltung der Erfindung weist die Anordnung ein Schildelement auf, welches zwischen der Rotorwelle und dem Gehäuse anordenbar ist, wobei die Lagereinheit und das Dämpfungselement zwischen der Rotorwelle und dem Schildelement oder zwischen dem Gehäuse und dem Schildelement anordenbar sind.

Das Schildelement kann insbesondere derart ausgeführt sein, dass es die Lagereinheit und das Dämpfungselement zumindest teilweise umschließt. Somit kann die gesamte Anordnung zum gedämpften Lagern eine bauliche Einheit bilden, welche insgesamt sehr einfach zu montieren, zu warten und auszutauschen ist.

Beispielsweise kann das Schildelement ringförmig ausgeführt sein und einen L-förmigen oder einen U-förmigen Querschnitt aufweisen und dabei derart angeordnet sein, dass die Einheit aus der Lagereinheit und dem Dämpfungselement in radialer Richtung zum Gehäuse oder zur Rotorwelle von dem Schildelement eingefasst wird. Weiterhin kann bei einem derartigen Querschnitt des Schildelementes eine axiale Einfassung in einer Richtung bzw. in beide Richtungen erreicht werden, wodurch einerseits die Stabilität der gesamten Anordnung zum gedämpften Lagern erhöht wird und andererseits die Montage und Wartung der gesamten Anordnung erleichtert wird.

Vorteilhafterweise berührt das Schildelement dabei nicht gleichzeitig das Gehäuse und die Rotorwelle. Vorzugsweise ist das Schildelement zwischen der Rotorwelle und dem Gehäuse angeordnet, wobei die Lagereinheit und das Dämpfungselement zwischen der Rotorwelle und dem Schildelement oder zwischen dem Gehäuse und dem Schildelement angeordnet sind.

Beispielsweise kann eine elektrische Maschine mit der oben vorgeschlagenen Anordnung zum gedämpften Lagern einer Rotorwelle eine Achshöhe von zumindest 350 mm, insbesondere mehr als 450 mm, aufweisen. Die Anordnung kann bei elektrischen Maschinen eingesetzt werden, welche mit einer elektrischen Leistung von zumindest 250 kW, insbesondere mehr als 1 MW, betreibbar sind.

Im Folgenden wird die Erfindung anhand der in den Figuren dargestellten Ausführungsbeispiele näher beschrieben und erläutert. Es zeigen:
- FIG 1-6: ein erstes bis sechstes Beispiel einer Anordnung zum gedämpften Lagern einer Rotorwelle einer elektrischen Maschine.
- Fig. 7: ein Ausführungsbeispiel einer erfindungsgemäßen Anordnung zum gedämpften Lagern einer Rotorwelle einer elektrischen Maschine.

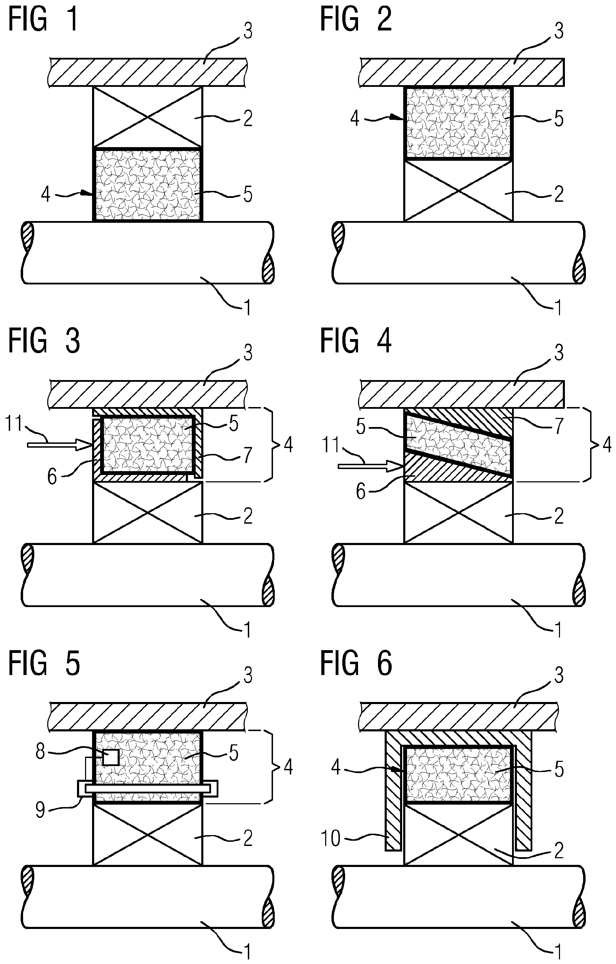

Figur 1 zeigt ein erstes Beispiel der Anordnung zum gedämpften Lagern einer Rotorwelle 1 einer elektrischen Maschine.

Die Anordnung ist zwischen einem Gehäuse 3 einer elektrischen Maschine und der Rotorwelle 1 der elektrischen Maschine angeordnet und weist eine Lagereinheit 2 und ein Dämpfungselement 4 auf. Dabei weist das Dämpfungselement 4 ein Geflecht aus Metalldraht 5 auf. Gemäß dem ersten Ausführungsbeispiel ist dabei das Dämpfungselement 4 radial weiter innen als das Lagerelement 2 angeordnet. Die Lagereinheit 2 kann beispielsweise als Wälzlager oder als Gleitlager ausgeführt sein.

Figur 2 zeigt ein zweites Beispiel der Anordnung.

Gleiche Bezugszeichen wie in Figur 1 bezeichnen dabei gleiche Gegenstände. In Abwandlung des ersten Beispiels ist die Anordnung zum gedämpften Lagern derart ausgestaltet, dass das Lagerelement 2 radial weiter innen als das Dämpfungselement 4 angeordnet ist.

Figur 3 zeigt ein drittes Beispiel der Anordnung.

Die Anordnung zum gedämpften Lagern gemäß dem dritten Beispiel ist jener des zweiten Beispiels ähnlich, wobei das Dämpfungselement 4 einen inneren Ring 6 und einen äußeren Ring 7 aufweist. Das Geflecht aus Metalldraht 5 des Dämpfungselementes 4 ist zwischen dem inneren Ring 6 und dem äußeren Ring 7 angeordnet. Die beiden Ringe 6 und 7 weisen dabei jeweils einen L-förmigen Querschnitt auf und bilden zusammen im Querschnitt betrachtet insbesondere eine in etwa rechteckige Einhausung für das Geflecht aus Metalldraht 5.

Beispielsweise kann auf den inneren Ring 6 eine Vorspannkraft in axialer Richtung aufgebracht werden, wie durch den Pfeil mit dem Bezugszeichen 11 angedeutet.

Eine derartige Einfassung des Geflechtes aus Metalldraht 5 anhand des inneren Ringes 6 und des äußeren Ringes 7 kann ebenfalls bei der Anordnung zum gedämpften Lagern gemäß dem ersten Ausführungsbeispiel vorgesehen sein.

Figur 4 zeigt ein viertes Beispiel der Anordnung. In Abwandlung des dritten Beispiels weisen der innere Ring 6 und der äußere Ring 7 jeweils einen keilförmigen Querschnitt auf. Dabei verjüngt sich der Keil des inneren Ringes 6 in die eine axiale Richtung, während sich der Keil des äußeren Ringes 7 in die andere axiale Richtung verjüngt. Wiederum ist das Geflecht aus Metalldraht 5 zwischen den beiden Ringen 6 und 7 angeordnet.

Beispielsweise kann auf den inneren Ring 6 eine Vorspannkraft in axialer Richtung aufgebracht werden, wie durch den Pfeil mit dem Bezugszeichen 11 angedeutet.

Eine derartige Einfassung des Geflechtes aus Metalldraht 5 anhand des inneren Ringes 6 und des äußeren Ringes 7 kann ebenfalls bei der Anordnung zum gedämpften Lagern gemäß dem ersten Ausführungsbeispiel vorgesehen sein.

Figur 5 zeigt ein fünftes Beispiel der Anordnung.

Die Anordnung zum gedämpften Lagern gemäß dem fünften Beispiel ist jener des zweiten Beispiels ähnlich, wobei zusätzlich ein Sensorelement 8 und ein Kraftelement 9 vorgesehen sind. Mittels des Sensorelementes 8 ist eine Federkonstante des Dämpfungselementes 4, eine Dämpfungskonstante des Dämpfungselementes 4 und/oder eine auf das Dämpfungselement 4 wirkende Vorspannkraft erfassbar. Insbesondere ist das Sensorelement 8 hierzu im Dämpfungselement 4 bzw. am Geflecht aus Metalldraht 5 angeordnet.

Das Sensorelement 8 ist mit dem Kraftelement 9 wirkverbunden, mittels welchem das Dämpfungselement 4 regelbar vorspannbar ist. Beispielsweise weist das Kraftelement 9 zumindest einen Bolzen auf, welcher durch das Dämpfungselement 4 bzw. das Geflecht aus Metalldraht 5 hindurchgeführt wird, wobei an den beiden axialen Enden des jeweiligen Bolzens eine Vorrichtung vorgesehen ist, mittels welcher eine Druck- oder Zugkraft auf das Dämpfungselement 4 bzw. das Geflecht aus Metalldraht 5 ausgeübt werden kann.

Die regelbare Vorspannung des Dämpfungselementes 4 mittels des Kraftelementes 9 wird insbesondere dadurch realisiert, dass das Sensorelement 8 zumindest eine Eingangsgröße erfasst, welche beispielsweise die Dämpfungskonstante des Dämpfungselementes 8 ist. Die Eingangsgröße wird mit einer Sollgröße verglichen, beispielsweise einer vorgebbaren Dämpfungskonstante, wobei der Vergleich insbesondere durch eine Recheneinheit einer Steuerung vorgenommen werden kann. Basierend auf diesem Vergleich wird das Kraftelement 9 derart beaufschlagt, dass das Dämpfungselement 4 die gewünschte Sollgröße aufweist. Insbesondere kann die Recheneinheit hierzu eine solche Größe einer Vorspannkraft ermitteln, welche die Krafteinheit 9 auf das Dämpfungselement 4 ausüben muss, damit die gewünschte Sollgröße erreicht wird.

Diese regelbare Vorspannung des Dämpfungselementes 4 kann insbesondere auch bei den Anordnungen zum gedämpften Lagern gemäß dem ersten, dem dritten oder dem vierten Beispiel zum Einsatz kommen.

Figur 6 zeigt ein sechstes Beispiel der Anordnung.

Die Anordnung zum gedämpften Lagern gemäß dem sechsten Beispiel ist jener des zweiten Beispiels ähnlich, wobei zusätzlich ein Schildelement 10 vorgesehen ist, welches zwischen der Rotorwelle 1 und dem Gehäuse 3 angeordnet ist. Dabei sind die Lagereinheit 2 und das Dämpfungselement 4 zwischen der Rotorwelle 1 und dem Schildelement 10 angeordnet.

Das Schildelement 10 weist einen U-förmigen Querschnitt auf, wobei die Öffnung der U-Form wie im vorliegenden Ausführungsbeispiel zur Rotorwelle hin ausgerichtet sein kann. Dabei sind das Dämpfungselement 4 und die Lagereinheit 2 zumindest teilweise innerhalb der U-Form angeordnet, so dass das Schildelement 10 das Dämpfungselement 4 und die Lagereinheit 2 teilweise einhaust.

Alternativ können die Lagereinheit 2 und das Dämpfungselement 4 zwischen dem Gehäuse 3 und dem Schildelement 10 angeordnet sein. Weist das Schildelement 10 einen U-förmigen Querschnitt auf, so kann die Öffnung der U-Form zum Gehäuse hin ausgerichtet sein.

Vorteilhafterweise berührt das Schildelement 10 nicht gleichzeitig das Gehäuse 3 und die Rotorwelle 1.

Das Schildelement 10 kann insbesondere auch bei den Anordnungen zum gedämpften Lagern gemäß dem ersten, dem dritten, dem vierten oder dem fünften Ausführungsbeispiel zum Einsatz kommen.

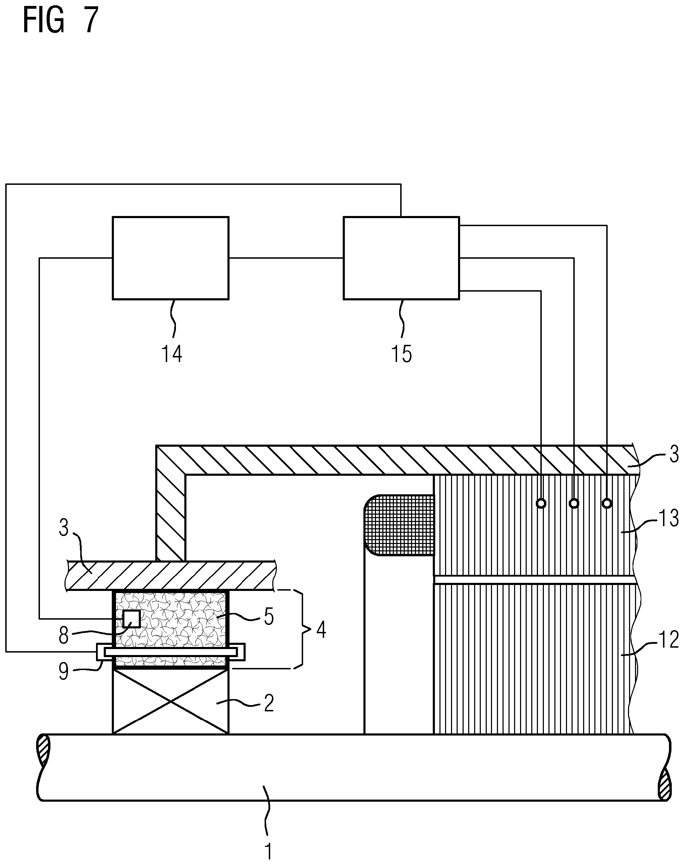

Figur 7 zeigt ein Ausführungsbeispiel der erfindungsgemäßen Anordnung.

Die Anordnung zum gedämpften Lagern gemäß dem Ausführungsbeispiel weist eine Anordnung zum gedämpften Lagern der Rotorwelle 1 auf, welche jener des fünften Beispiels ähnlich ist. Weiterhin weist die Anordnung eine Recheneinheit 14 und eine mit der Recheneinheit 14 verbundene Umrichtereinheit 15 auf. Die elektrische Maschine weist einen Rotor 12, welcher ist der Rotorwelle 1 drehfest verbunden ist, und einen Stator 13 auf, welche von der Umrichtereinheit 15 mit elektrischem Strom beaufschlagbar ist.

Mittels des Sensorelementes 8 sind Eigenfrequenzen der gedämpft gelagerten Rotorwelle 1 und/oder der elektrischen Maschine ermittelbar, wobei die Eigenfrequenzen vom Sensorelement 8 an die mit dem Sensorelement 8 verbundene Recheneinheit 14 übermittelt werden können. Die Recheneinheit 14 ist dazu ausgelegt, Sollwerte für das Kraftelement 9 zu ermitteln und an die Umrichtereinheit 15 zu übermitteln. Das Kraftelement 9 ist durch die Umrichtereinheit 15 gemäß den Sollwerten derart beaufschlagbar, dass die Rotorwelle 1 und/oder die elektrische Maschine überkritisch betreibbar ist oder derart, dass die Eigenfrequenzen der gedämpft gelagerten Rotorwelle 1 größer als eine Betriebsfrequenz der elektrischen Maschine sind. Für den Fall, dass die Rotorwelle 1 und/oder die elektrische Maschine überkritisch betreibbar ist, sind die Eigenfrequenzen dabei bis zum Erreichen der Betriebsfrequenz oder des Stillstands mit einer größtmöglichen, zeitlichen Drehzahländerung durchfahrbar.

## Patentansprüche

1. Anordnung zum gedämpften Lagern einer Rotorwelle (1) einer elektrischen Maschine, wobei die elektrische Maschine einen Stator (13) und einen Rotor (12) mit der Rotorwelle (1) aufweist, wobei die Anordnung aufweist:
- eine Lagereinheit (2), welche zwischen der Rotorwelle (1) und einem Gehäuse (3) der elektrischen Maschine anordenbar ist, und
- ein Dämpfungselement (4), welches zwischen der Lagereinheit (2) und der Rotorwelle (1) oder zwischen der Lagereinheit (2) und dem Gehäuse (3) anordenbar ist,
wobei das Dämpfungselement (4) ein Geflecht aus Metalldraht (5) aufweist,
wobei die Lagereinheit (2) als Wälzlager oder als Gleitlager ausgebildet ist,
**dadurch gekennzeichnet, dass**
die Anordnung eine Recheneinheit (14) und eine Umrichtereinheit (15) umfasst,
wobei die Recheneinheit (14) mit der Umrichtereinheit (15) verbunden ist und die Umrichtereinheit (15) mit dem Stator (13) der elektrischen Maschine verbindbar ist,
wobei die jeweilige Anordnung ein Sensorelement (8) und ein mit dem Sensorelement (8) wirkverbundenes Kraftelement (9) aufweist,
wobei Eigenfrequenzen der gedämpft gelagerten Rotorwelle (1) und/oder der elektrischen Maschine mittels des Sensorelementes (8) ermittelbar sind,
wobei die Eigenfrequenzen vom Sensorelement (8) an die Recheneinheit (14) übermittelbar sind,
wobei Sollwerte für das Kraftelement (9) durch die Recheneinheit (14) ermittelbar sind,
wobei die Sollwerte von der Recheneinheit (14) an die Umrichtereinheit (15) übermittelbar sind,
wobei das Kraftelement (9) durch die Umrichtereinheit (15) gemäß den Sollwerten derart beaufschlagbar ist, und wobei das Dämpfungselement (4) mittels des Kraftelementes (9) derart beaufschlagbar ist, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrischen Maschine sind,
wobei, falls die Rotorwelle (1) und/oder die elektrische Maschine überkritisch betreibbar ist, die Eigenfrequenzen bis zum Erreichen der Betriebsfrequenz oder des Stillstands mit einer größtmöglichen, zeitlichen Drehzahländerung durchfahrbar sind,
wobei das Kraftelement (9) zumindest einen Bolzen aufweist, welcher durch das Geflecht aus Metalldraht (5) hin durchgeführt wird,
wobei das Kraftelement (9) weiterhin an den beiden axialen Enden des jeweiligen Bolzens eine Vorrichtung aufweist, mittels welcher eine Druck- oder Zugkraft auf das Geflecht aus Metalldraht (5) ausübbar ist.

2. Anordnung nach Anspruch 1,
wobei das Dämpfungselement (4) einen inneren Ring (6) und einen äußeren Ring (7) aufweist,
wobei das Geflecht aus Metalldraht (5) zwischen dem inneren Ring (6) und dem äußeren Ring (7) angeordnet ist.

3. Anordnung nach Anspruch 2,
wobei der innere Ring (6) und/oder der äußere Ring (7) einen L-förmigen Querschnitt aufweist.

4. Anordnung nach Anspruch 2,
wobei der innere Ring (6) und/oder der äußere Ring (7) einen keilförmigen Querschnitt aufweist.

5. Anordnung nach einem der vorhergehenden Ansprüche,
wobei das Dämpfungselement (4) eine Federkonstante, eine Dämpfungskonstante und Eigenfrequenzen aufweist,
wobei das Dämpfungselement (4) derart vorspannbar ist, dass das Dämpfungselement (4) eine vorgebbare Federkonstante, eine vorgebbare Dämpfungskonstante und/oder vorgebbare Eigenfrequenzen aufweist.

6. Anordnung nach Anspruch 5,
wobei ein Sensorelement (8) vorgesehen ist, mittels welchem die Federkonstante des Dämpfungselementes (4), die Dämpfungskonstante des Dämpfungselementes (4) und/oder die Eigenfrequenzen des Dämpfungselementes (4) erfassbar sind,
wobei ein Kraftelement (9) vorgesehen ist, welches mit dem Sensorelement (8) wirkverbunden ist und mittels welchem das Dämpfungselement (4) regelbar vorspannbar ist.

7. Anordnung nach einem der vorhergehenden Ansprüche,
wobei das Dämpfungselement (4) derart vorspannbar ist, dass die Rotorwelle (1) und/oder die elektrische Maschine überkritisch betreibbar ist.

8. Anordnung nach einem der Ansprüche 1-6,
wobei das Dämpfungselement (4) derart vorspannbar ist, dass Eigenfrequenzen der gedämpft gelagerten Rotorwelle (1) größer als eine Betriebsfrequenz der elektrische Maschine sind.

9. Anordnung nach einem der vorhergehenden Ansprüche,
wobei die Anordnung ein Schildelement (10) aufweist, welches zwischen der Rotorwelle (1) und dem Gehäuse (3) anordenbar ist,
wobei die Lagereinheit (2) und das Dämpfungselement (4) zwischen der Rotorwelle (1) und dem Schildelement (10) oder zwischen dem Gehäuse (3) und dem Schildelement (10) anordenbar sind,
wobei das Schildelement (10) die Lagereinheit (2) und das Dämpfungselement (4) zumindest teilweise umschließt.

10. Elektrische Maschine umfassend
- einen Stator (13) und einen Rotor (12) mit einer Rotorwelle (1) und
- zumindest eine Anordnung zum gedämpften Lagern der Rotorwelle (1) nach einem der vorhergehenden Ansprüche.

11. Verfahren zum gedämpften Lagern einer Rotorwelle (1) einer elektrischen Maschine,
wobei zumindest eine Anordnung zum gedämpften Lagern der Rotorwelle (1) vorgesehen ist,
wobei die elektrische Maschine einen Stator (13) und einen Rotor (12) mit der Rotorwelle (1) aufweist,
wobei eine Recheneinheit (14) und eine Umrichtereinheit (15) vorgesehen sind, wobei die Recheneinheit (14) mit der Umrichtereinheit (15) und die Umrichtereinheit (15) mit dem Stator (13) der elektrischen Maschine wirkverbunden sind,
wobei die jeweilige Anordnung eine Lagereinheit (2), welche zwischen der Rotorwelle (1) und einem Gehäuse (3) der elektrischen Maschine angeordnet ist, und ein Dämpfungselement (4) aufweist, welches zwischen der Lagereinheit (2) und der Rotorwelle (1) oder zwischen der Lagereinheit (2) und dem Gehäuse (3) angeordnet ist,
wobei das Dämpfungselement (3) ein Geflecht aus Metalldraht (5) aufweist,
wobei die Lagereinheit (2) als Wälzlager oder als Gleitlager ausgebildet ist,
wobei die jeweilige Anordnung ein Sensorelement (8) und ein mit dem Sensorelement (8) wirkverbundenes Kraftelement (9) aufweist,
wobei das Kraftelement (9) zumindest einen Bolzen aufweist, welcher durch das Geflecht aus Metalldraht (5) hin durchgeführt wird,
wobei das Kraftelement (9) weiterhin an den beiden axialen Enden des jeweiligen Bolzens eine Vorrichtung aufweist, mittels welcher eine Druck- oder Zugkraft auf das Geflecht aus Metalldraht (5) ausübbar ist,
aufweisend die Verfahrensschritte:
- Erfassen einer Federkonstante des Dämpfungselementes (4), einer Dämpfungskonstante des Dämpfungselementes (4) und/oder von Eigenfrequenzen des Dämpfungselementes (4) mittels des Sensorelementes (8),
- Regelbares Vorspannen des Dämpfungselementes (4) mittels des Kraftelementes (9) derart, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrischen Maschine sind,
- Ermitteln der Eigenfrequenzen der gedämpft gelagerten Rotorwelle (1) und/oder der elektrischen Maschine mittels des Sensorelementes (8),
- Übermitteln der Eigenfrequenzen vom Sensorelement (8) an die Recheneinheit (14),
- Ermitteln von Sollwerten für das Kraftelement (9) durch die Recheneinheit (14),
- Übermitteln der Sollwerte von der Recheneinheit (14) an die Umrichtereinheit (15),
- Beaufschlagen des Kraftelementes (9) durch die Umrichtereinheit (15) gemäß den Sollwerten derart, und Beaufschlagen des Dämpfungselementes (4) mittels des Kraftelementes (9) derart, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrischen Maschine sind,
- falls die Rotorwelle (1) und/oder die elektrische Maschine überkritisch betrieben wird: Durchfahren der Eigenfrequenzen bis zum Erreichen der Betriebsfrequenz oder des Stillstands mit einer größtmöglichen, zeitlichen Drehzahländerung.

## Claims

1. Arrangement for the damped bearing of a rotor shaft (1) of an electric machine, wherein the electric machine has a stator (13) and a rotor (12) with the rotor shaft (1), wherein the arrangement has:
- a bearing unit (2) which can be arranged between the rotor shaft (1) and a housing (3) of the electric machine, and
- a damping element (4) which can be arranged between the bearing unit (2) and the rotor shaft (1) or between the bearing unit (2) and the housing (3),
wherein the damping element (4) has a mesh of metal wire (5),
wherein the bearing unit (2) is configured as a rolling bearing or as a plain bearing,
**characterised in that**
the arrangement comprises a computing unit (14) and a converter unit (15),
wherein the computing unit (14) is connected to the converter unit (15) and the converter unit (15) is able to be connected to the stator (13) of the electric machine,
wherein the respective arrangement has a sensor element (8) and a force element (9) operatively connected to the sensor element (8),
wherein the natural frequencies of the rotor shaft (1) and/or the electric machine mounted in a damped manner are able to be determined by means of the sensor element (8),
wherein the natural frequencies are able to be transmitted from the sensor element (8) to the computing unit (14),
wherein set values for the force element (9) are able to be determined by the computing unit (14),
wherein the set values are able to be transmitted from the computing unit (14) to the converter unit (15),
wherein the force element (9) is able to be acted upon by the converter unit (15) according to the set values, and wherein the damping element (4) is able to be acted upon by means of the force element (9), such that the rotor shaft (1) and/or the electric machine is able to be operated supercritically or such that the natural frequencies of the rotor shaft (1) mounted in a damped manner are higher than an operating frequency of the electric machine,
wherein, if the rotor shaft (1) and/or the electric machine is able to be operated supercritically, it is possible to pass through the natural frequencies with the greatest possible chronological change to the rotational speed until the operating frequency or a standstill is reached,
wherein the force element (9) has at least one pin which is passed through the mesh of metal wire (5),
wherein at the two axial ends of the respective pin, the force element (9) furthermore has a device, by means of which it is possible to exert a compressive force or tensile force on the mesh of metal wire (5).

2. Arrangement according to claim 1,
wherein the damping element (4) has an inner ring (6) and an outer ring (7),
wherein the mesh of metal wire (5) is arranged between the inner ring (6) and the outer ring (7).

3. Arrangement according to claim 2,
wherein the inner ring (6) and/or the outer ring (7) has an L-shaped cross section.

4. Arrangement according to claim 2,
wherein the inner ring (6) and/or the outer ring (7) has a wedge-shaped cross section.

5. Arrangement according to one of the preceding claims,
wherein the damping element (4) has a spring constant, a damping constant and natural frequencies,
wherein the damping element (4) is able to be pretensioned such that the damping element (4) has a predeterminable spring constant, a predeterminable damping constant and/or predeterminable natural frequencies.

6. Arrangement according to claim 5,
wherein a sensor element (8) is provided, the spring constant of the damping element (4), the damping constant of the damping element (4) and/or the natural frequencies of the damping element (4) being able to be detected thereby,
wherein a force element (9) is provided, said force element being operatively connected to the sensor element (8) and the damping element (4) being able to be pretensioned thereby in a controllable manner.

7. Arrangement according to one of the preceding claims,
wherein the damping element (4) is able to be pretensioned such that the rotor shaft (1) and/or the electric machine is able to be operated supercritically.

8. Arrangement according to one of claims 1-6,
wherein the damping element (4) is able to be pretensioned such that the natural frequencies of the rotor shaft (1) mounted in a damped manner are higher than an operating frequency of the electric machine.

9. Arrangement according to one of the preceding claims,
wherein the arrangement has a shield element (10) which is able to be arranged between the rotor shaft (1) and the housing (3),
wherein the bearing unit (2) and the damping element (4) are able to be arranged between the rotor shaft (1) and the shield element (10) or between the housing (3) and the shield element (10),
wherein the shield element (10) at least partially encloses the bearing unit (2) and the damping element (4).

10. Electric machine comprising
- a stator (13) and a rotor (12) with a rotor shaft (1) and
- at least one arrangement for the damped bearing of the rotor shaft (1) according to one of the preceding claims.

11. Method for the damped bearing of a rotor shaft (1) of an electric machine,
wherein at least one arrangement is provided for the damped bearing of the rotor shaft (1),
wherein the electric machine has a stator (13) and a rotor (12) with the rotor shaft (1),
wherein a computing unit (14) and a converter unit (15) are provided, wherein the computing unit (14) is operatively connected to the converter unit (15) and the converter unit (15) is operatively connected to the stator (13) of the electric machine,
wherein the respective arrangement has a bearing unit (2) which is arranged between the rotor shaft (1) and a housing (3) of the electric machine and a damping element (4) which is arranged between the bearing unit (2) and the rotor shaft (1) or between the bearing unit (2) and the housing (3),
wherein the damping element (3) has a mesh of metal wire (5),
wherein the bearing unit (2) is configured as a rolling bearing or as a plain bearing,
wherein the respective arrangement has a sensor element (8) and a force element (9) operatively connected to the sensor element (8),
wherein the force element (9) has at least one pin which is passed through the mesh of metal wire (5),
wherein at the two axial ends of the respective pin, the force element (9) furthermore has a device, by means of which it is possible to exert a compressive force or tensile force on the mesh of metal wire (5),
having the method steps:
- detecting a spring constant of the damping element (4), a damping constant of the damping element (4) and/or the natural frequencies of the damping element (4) by means of the sensor element (8),
- controllable pretensioning of the damping element (4) by means of the force element (9), such that the rotor shaft (1) and/or the electric machine is able to be operated supercritically or such that the natural frequencies of the rotor shaft (1) mounted in a damped manner are higher than an operating frequency of the electric machine,
- determining the natural frequencies of the rotor shaft (1) and/or the electric machine mounted in a damped manner by means of the sensor element (8),
- transmitting the natural frequencies from the sensor element (8) to the computing unit (14),
- determining set values for the force element (9) by the computing unit (14),
- transmitting the set values from the computing unit (14) to the converter unit (15),
- acting upon the force element (9) by means of the converter unit (15) according to the set values and acting upon the damping element (4) by means of the force element (9) such that the rotor shaft (1) and/or the electric machine is able to be operated supercritically or such that the natural frequencies of the rotor shaft (1) mounted in a damped manner are higher than an operating frequency of the electric machine,
- if the rotor shaft (1) and/or the electric machine is operated supercritically: passing through the natural frequencies with the greatest possible chronological change of the rotational speed until the operating frequency or the standstill is reached.

## Revendications

1. Agencement pour supporter de manière amortie un arbre (1) de rotor d'une machine électrique, la machine électrique comportant un stator (13) et un rotor (12) ayant l'arbre (1) de rotor, dans lequel l'agencement a :
- une unité (2) de palier, qui peut être disposée entre l'arbre (1) du rotor et une enveloppe (3) de la machine électrique, et
- un élément (4) d'amortissement, qui peut être disposé entre l'unité (2) de palier et l'arbre (1) du rotor ou entre l'unité (2) de palier et l'enveloppe (3),
dans lequel l'élément (4) d'amortissement a un treillis de fil (5) métallique,
dans lequel l'unité (2) de palier est constituée sous la forme d'un palier à roulement ou d'un palier lisse,
**caractérisé en ce que**
l'agencement comprend une unité (14) informatique et une unité (15) d'onduleur,
dans lequel l'unité (14) informatique est reliée à l'unité (15) d'onduleur et l'unité (15) d'onduleur peut être reliée au stator (13) de la machine électrique,
dans lequel l'agencement respectif a un élément (8) de capteur et un élément (9) de force relié en action à l'élément (8) de capteur,
dans lequel des fréquences propres de l'arbre (1) du rotor supporté de manière amortie et/ou de la machine électrique peuvent être déterminées au moyen de l'élément (8) de capteur, dans lequel les fréquences propres peuvent être transmises de l'élément (8) de capteur à l'unité (14) informatique,
dans lequel des valeurs de consigne de l'élément (9) de force peuvent être déterminées par l'unité (14) informatique,
dans lequel les valeurs de consigne peuvent être transmises de l'unité (14) informatique à l'unité (15) d'onduleur,
dans lequel l'élément (9) de force peut être alimenté suivant les valeurs de consigne par l'unité (15) informatique et dans lequel l'élément (4) d'amortissement peut être alimenté au moyen de l'élément (9) de force de manière à pouvoir faire fonctionner en surcritique l'arbre (1) du rotor et/ou la machine électrique ou de manière à ce que les fréquences propres de l'arbre (1) du rotor supporté de manière amortie soient plus grandes qu'une fréquence de fonctionnement de la machine électrique,
dans lequel si l'arbre (1) du rotor et/ou la machine électrique peut fonctionner en surcritique, les fréquences propres peuvent être parcourues jusqu'à atteindre la fréquence de fonctionnement ou l'arrêt avec une variation de vitesse de rotation dans le temps la plus grande possible,
dans lequel l'élément (9) de force a au moins un axe qui passe à travers le treillis de fil (5) métallique,
dans lequel l'élément (9) de force a en outre aux deux extrémités axiales de l'axe respectif un système au moyen duquel une force de pression ou de compression peut être appliquée aux fil (5) métallique.

2. Agencement suivant la revendication 1,
dans lequel l'élément (4) d'amortissement a un anneau (6) intérieur et un anneau (7) extérieur,
dans lequel le treillis en fil (5) métallique est disposé entre l'anneau (6) intérieur et l'anneau (7) extérieur.

3. Agencement suivant la revendication 2,
dans lequel l'anneau (6) intérieur et/ou l'anneau (7) extérieur a une section transversale en forme de L.

4. Agencement suivant la revendication 2,
dans lequel l'anneau (6) intérieur et/ou l'anneau (7) extérieur a une section transversale en forme de coin.

5. Agencement suivant l'une des revendications précédentes,
dans lequel l'élément (4) d'amortissement a une raideur, une constante d'amortissement et des fréquences propres,
dans lequel l'élément (4) d'amortissement peut être précontraint de manière à ce que l'élément (4) d'amortissement ait une raideur pouvant être donnée à l'avance, une constante d'amortissement pouvant être donnée à l'avance et/ou des fréquences propres pouvant être données à l'avance.

6. Agencement suivant la revendication 5,
dans lequel il est prévu un élément (8) de capteur, au moyen duquel la raideur de l'élément (4) d'amortissement, la constante d'amortissement de l'élément (4) d'amortissement et/ou les fréquences propres de l'élément (4) d'amortissement peuvent être détectées,
dans lequel il est prévu un élément (9) de force, qui est relié en action à l'élément (8) de capteur et au moyen duquel l'élément (4) d'amortissement peut être précontraint de manière réglable.

7. Agencement suivant l'une des revendications précédentes,
dans lequel l'élément (4) d'amortissement peut être précontraint de manière réglable de manière à ce que l'arbre (1) du rotor et/ou la machine électrique puisse fonctionner en surcritique.

8. Agencement suivant l'une des revendications 1 à 6,
dans lequel l'élément (4) d'amortissement peut être précontraint de manière à ce que des fréquences propres de l'arbre (1) du rotor supporté de manière amortie soient plus grandes qu'une fréquence de fonctionnement de la machine électrique.

9. Agencement suivant l'une des revendications précédentes,
dans lequel l'agencement a un élément (10) de bouclier, qui peut être disposé entre l'arbre (1) du rotor et l'enveloppe (3),
dans lequel l'unité (2) de palier et l'élément (4) d'amortissement peuvent être disposés entre l'arbre (1) du rotor et l'élément (10) de bouclier ou entre l'enveloppe (3) et l'élément (10) de bouclier,
dans lequel l'élément (10) de bouclier entoure au moins en partie l'unité (2) de palier et l'élément (4) d'amortissement.

10. Machine électrique comprenant
- un stator (13) et un rotor (12) ayant un arbre (1) de rotor et
- au moins un agencement pour supporter de manière amortie l'arbre (1) du rotor suivant l'une des revendications précédentes.

11. Procédé pour supporter de manière amortie un arbre (1) de rotor d'une machine électrique,
dans lequel il est prévu au moins un agencement pour supporter de manière amortie l'arbre (1) du rotor,
dans lequel la machine électrique comporte un stator (13) et un rotor (12) ayant l'arbre (1) du rotor,
dans lequel il est prévu une unité (14) informatique et une unité (15) d'onduleur, dans lequel l'unité (14) informatique est reliée en action à l'unité d'onduleur et l'unité (15) d'onduleur au stator (13) de la machine électrique,
dans lequel l'agencement respectif a une unité (2) de palier, qui est disposée entre l'arbre (1) du rotor et une enveloppe de la machine électrique, et un élément (4) d'amortissement, qui est disposé entre l'unité (2) de palier et l'arbre (1) du rotor ou entre l'unité (2) de palier et l'enveloppe (3),
dans lequel l'élément d'amortissement (3) a un treillis de fil (5) métallique,
dans lequel l'unité (2) de palier est constituée sous la forme d'un palier à roulement ou d'un palier lisse,
dans lequel l'agencement respectif a un élément (8) de capteur et un élément (9) de force relié en action à l'élément (8) de capteur,
dans lequel l'élément (9) de force a au moins un axe qui passe à travers le treillis en fil (5) métallique,
dans lequel l'élément (9) de force a en outre aux deux extrémités axiales de l'axe respectif un système au moyen duquel une force de pression ou de traction peut être appliquée au treillis en fil (5) métallique,
comportant les stades de procédé :
- détection d'une raideur de l'élément (4) d'amortissement, d'une constante d'amortissement de l'élément (4) d'amortissement et/ou de fréquences propres de l'élément (4) d'amortissement au moyen de l'élément (8) de capteur,
- précontrainte réglable de l'élément (4) d'amortissement au moyen de l'élément (9) de force, de manière à ce que l'arbre (1) du rotor et/ou la machine électrique puisse fonctionner en surcritique ou de manière à ce que des fréquences propres de l'arbre (1) du rotor supporté de manière amortie soient plus grandes qu'une fréquence de fonctionnement de la machine électrique,
- détermination des fréquences propres de l'arbre (1) du rotor supporté de manière amortie et/ou de la machine électrique au moyen de l'élément (8) de capteur,
- transmission de fréquences propres de l'élément (8) de capteur à l'unité (14) informatique,
- détermination de valeurs de consigne de l'élément (9) de force par l'unité (14) informatique,
- transmission de valeurs de consigne à l'unité (14) informatique à l'unité (15) d'onduleur,
- alimentation de l'élément (9) de force par l'unité (15) de l'onduleur suivant les valeurs de consigne de manière à ce, et l'alimentation de l'élément (4) d'amortissement au moyen de l'élément (9) de force de manière à ce que l'arbre (1) du rotor et/ou la machine électrique puisse fonctionner en surcritique ou de manière à ce que des fréquences propres de l'arbre (1) du rotor supporté de manière amortie soient plus grandes qu'une fréquence de fonctionnement de la machine électrique,
- si l'arbre (1) du rotor et/ou la machine électrique fonctionne en surcritique : passage par les fréquences propres jusqu'à atteindre la fréquence de fonctionnement ou l'arrêt en ayant une variation de la vitesse de rotation en fonction du temps la plus grande possible.
